# EUROPEAN PATENT APPLICATION

(11) **EP 2 130 666 A2**
(43) Date of publication of application: **09.12.2009**
(21) Application number: 09251343.1
(22) Date of filing: 19.05.2009
(51) Int. Cl.: B29C 70/38

(54) **Tight constellation composite tape-laying machine**

(30) Priority: 05.06.2008 US 133754
(71) Applicant: The Boeing Company, Chicago, IL 60606-2016 (US)
(72) Inventor: Hogg, Merrill W., Maple Valley, WA 98038-8657 (US); Hagen, Allen B., Auburn, WA 98001-3709 (US)
(74) Representative: McLeish, Nicholas Alistair Maxwell

(57) **Abstract**

An apparatus for laying tape on a workpiece. The apparatus includes a constellation frame and a first tape-laying head comprising a first compaction roller attached to constellation frame such that the first compaction roller can have a five axis motion with respect to the constellation frame. A second tape-laying head comprising a second compaction roller may be attached to the constellation frame such that the second compaction roller can have a five axis motion with respect to the constellation frame that is independent of the motion of the first tape-laying head.

## Description

### BACKGROUND INFORMATION

### 1. Field:

The present disclosure relates generally to machines for applying composite materials. More particularly, the present disclosure relates to an apparatus for applying tape to contoured surfaces.

### 2. Background:

Composite structures such as those used in the automotive, marine and aerospace industries may be fabricated using automated composite material application machines, commonly referred to as automated fiber placement (AFP) machines. AFP machines may be used in the aircraft industry, for example to fabricate structural shapes and skin assemblies by wrapping relatively narrow strips of composite, slit tape or "tows", collimated into a wider band, around a manufacturing tool. The AFP machine aligns and places a plurality of tape strips, typically six or more, in continuous, edge to edge contact forming a single wide, conformal bandwidth which is placed on and compacted against the tool.

Thus, the composite lay-up includes one or more layers of tape, with each layer being formed from touching and/or overlapping strips of the material. A resin, which may be pre-impregnated in the material or later injected into one or more of the layers of material, can be processed after layup to cure the composite lay-up such that the tape strips may be consolidated. At the end of the curing process, the raw object may be formed. In some cases, the raw object may be further processed in order to make the object more suitable for an intended purpose.

However, especially in the aircraft construction industry, at least two problems present themselves with respect to tape-laying machines. First, existing AFP machines do not lay the large volumes of tape needed to construct a large aircraft component such as a wing or fuselage quickly enough. Second, some objects to be constructed from composite materials may be contoured and even highly contoured. For example, the leading edge of a wing may have a precise, highly-curved shape. In some cases, the shape of the object to be constructed can be both highly contoured and irregular, such as, perhaps, in the case of stringers, frames, spars and/or other support structures.

Existing methods for making highly contoured composite components are generally limited to hand layup techniques, braid/resin infusion fabrication, and the use of automated fiber placement (AFP) machines, however each of these techniques has disadvantages. For example, hand layup requiring manual placement of narrow bands of material into multi-leg shapes is both costly and time consuming, and therefore may be only suitable for prototyping activities and small production runs. Similarly, a known technique in which fibers are braided to form contoured shapes and then infused with resin is also time consuming and may produce components that exhibit qualities not suited to high performance applications, including added weight.

Accordingly, there is a need for an automatic fiber placement apparatus that can lay the large volumes of tape needed to construct large aircraft components quickly. There is also a need for an apparatus for laying up contoured and even highly contoured surfaces.

### SUMMARY

An embodiment of the present disclosure provides for an apparatus for laying tape on a workpiece. The apparatus includes a constellation frame and a first tape-laying head comprising a first compaction roller attached to constellation frame such that the first compaction roller can have five axis motion with respect to the constellation frame. A second tape-laying head comprising a second compaction roller may be attached to the constellation frame such that the second compaction roller can have five axis motion with respect to the constellation frame. The second tape-laying head can have five axis motion that is independent of five axis motion of the first tape-laying head.

An embodiment of the present disclosure provides for a method for laying tape on a workpiece. The method includes laying tape on the workpiece using an apparatus. The apparatus includes a constellation frame and a plurality of tape-laying heads attached to the constellation frame such that each of the plurality of tape-laying heads independently have five axis motion with respect to the constellation frame.

An embodiment of the present disclosure provides for an apparatus for laying tape on a tool. The apparatus includes a gantry machine with X and Y axes of travel that exceed outer dimensions of the tool. A cluster of three or more tape-laying heads attaches to the gantry, the cluster having a multi-head array. The connection between the multi-head array and the gantry may have yaw, pitch, and roll rotational capability for moving the tape-laying heads normal to a surface of the tool, on which the tape may be laid. Each of the three or more tape-laying heads may have further movement capability to allow movement of each of the tape-laying heads to be fine-tuned individually depending on a contour of the tool. The three or more tape-laying heads may be in proximity to one another such that each tape-laying head may be within a distance approximately equal to a width of a tape, or multiple tapes, for which a corresponding tape-laying head may be designed to hold. Each of the three or more tape-laying heads may be self contained, with each of the three or more tape-laying heads having a corresponding different supply of tape.

22. An apparatus for laying tape on a tool, the apparatus comprising:
a gantry machine with at least one axis of travel that exceeds outer dimensions of the tool;
a ram connected to the gantry machine, wherein the ram is capable of translational movement with respect to the gantry machine;
a cluster of three or more tape-laying heads attached to the ram, the cluster comprising a multi-head array, wherein corresponding ones of the three or more tape-laying heads can maintain corresponding perpendicular orientations to corresponding portions of a surface of the tool on which the tape is laid;
wherein each of the three or more tape-laying heads further has movement capability to allow movement of each of the three or more tape-laying heads to be fine-tuned individually depending on a contour of the tool;
wherein the three or more tape-laying heads are in proximity to one another such that each tape-laying head is within a distance equal to or less than about a width of a tape, or multiple widths of tape, which a corresponding tape-laying head is designed to hold; and
wherein each of the three or more tape-laying heads is self contained, with each of the three or more tape-laying heads having a corresponding different supply of tape.

### BRIEF DESCRIPTION OF THE DRAWINGS

The novel features believed characteristic of the advantageous embodiments may be set forth in the appended claims. The advantageous embodiments, however, as well as a preferred mode of use, further objectives and advantages thereof, will best be understood by reference to the following detailed description of an advantageous embodiment of the present disclosure when read in conjunction with the accompanying drawings, wherein:
**Figure 1** shows a flow diagram of aircraft production and service method; and
**Figure 2** shows a block diagram of an aircraft;
**Figure 3** shows a functional diagram of a tape-laying machine for use in applying tape to a workpiece, in accordance with an advantageous embodiment;
**Figure 4** shows a tape-laying machine for use in applying tape to a workpiece, in accordance with an advantageous embodiment;
**Figure 5** shows a view of a constellation frame for a tape-laying machine, in accordance with an advantageous embodiment;
**Figure 5A** shows a magnified portion of a tape laying head shown in **Figure 5**, in accordance with an advantageous embodiment;
**Figure 6** shows a view of a constellation frame for a tape-laying machine, in accordance with an advantageous embodiment;
**Figure 7** shows a view of a constellation frame for a tape-laying machine, in accordance with an advantageous embodiment;
**Figure 8** shows a view of a constellation frame for a tape-laying machine, in accordance with an advantageous embodiment;
**Figure 9** shows a view of a tape-laying head for a constellation frame for a tape-laying machine, in accordance with an advantageous embodiment;
**Figure 10** shows a view of a tape-laying head for a constellation frame for a tape-laying machine, in accordance with an advantageous embodiment.
**Figure 11** shows a view of a tape-laying head for a constellation frame for a tape-laying machine, in accordance with an advantageous embodiment;
**Figure 12** shows a tape-laying machine for use in applying tape to a workpiece, in accordance with an advantageous embodiment;
**Figure 13** shows a flowchart illustrating a process of operating a tape-laying machine, in accordance with an advantageous embodiment;

### DETAILED DESCRIPTION

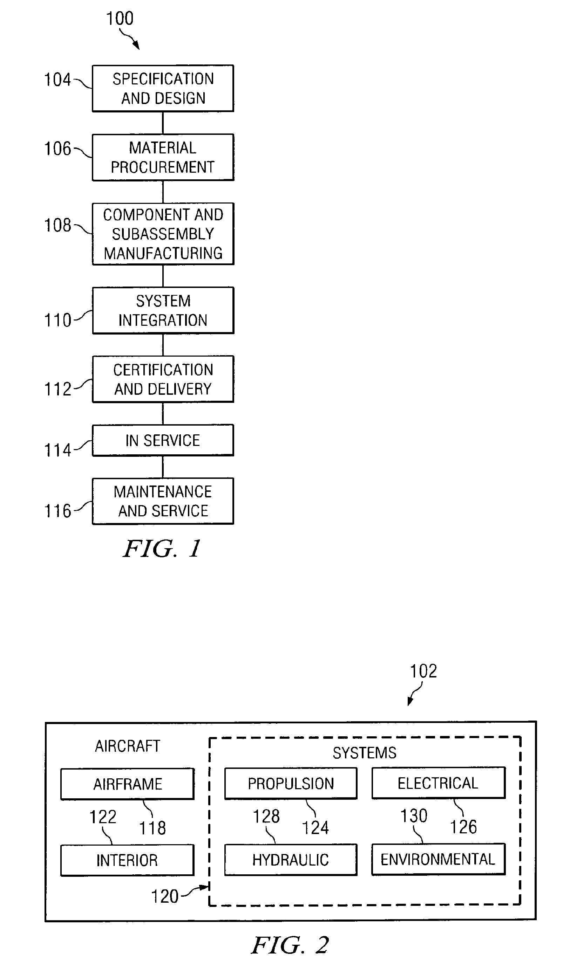

Referring more particularly to the drawings, embodiments of the disclosure may be described in the context of an aircraft manufacturing and service method **100** as shown in **Figure 1** and an aircraft **102** as shown in **Figure 2****.** During pre-production, exemplary method **100** may include specification and design **104** of the aircraft **102** and material procurement **106.** During production, component and subassembly manufacturing **108** and system integration **110** of the aircraft **102** takes place. Thereafter, the aircraft **102** may go through certification and delivery **112** in order to be placed in service **114**. While in service by a customer, the aircraft **102** is scheduled for routine maintenance and service **116** (which may also include modification, reconfiguration, refurbishment, and so on).

Each of the processes of method **100** may be performed or carried out by a system integrator, a third party, and/or an operator (e.g., a customer). For the purposes of this description, a system integrator may include without limitation any number of aircraft manufacturers and major-system subcontractors; a third party may include without limitation any number of venders, subcontractors, and suppliers; and an operator may be an airline, leasing company, military entity, service organization, and so on.

As shown in **Figure 2**, the aircraft **102** produced by exemplary method **100** may include an airframe **118** with a plurality of systems **120** and an interior **122.** Examples of high-level systems **120** include one or more of a propulsion system **124,** an electrical system **126,** a hydraulic system **128,** and an environmental system **130.** Any number of other systems may be included. Although an aerospace example is shown, the principles of the invention may be applied to other industries, such as the automotive industry.

Apparatus and methods embodied herein may be employed during any one or more of the stages of the production and service method **100**. For example, components or subassemblies corresponding to production process 108 may be fabricated or manufactured in a manner similar to components or subassemblies produced while the aircraft **102** is in service. Also, one or more apparatus embodiments, method embodiments, or a combination thereof may be utilized during the production stages **108** and **110,** for example, by substantially expediting assembly of or reducing the cost of an aircraft **102.** Similarly, one or more of apparatus embodiments, method embodiments, or a combination thereof may be utilized while the aircraft **102** is in service, for example and without limitation, to maintenance and service **116.**

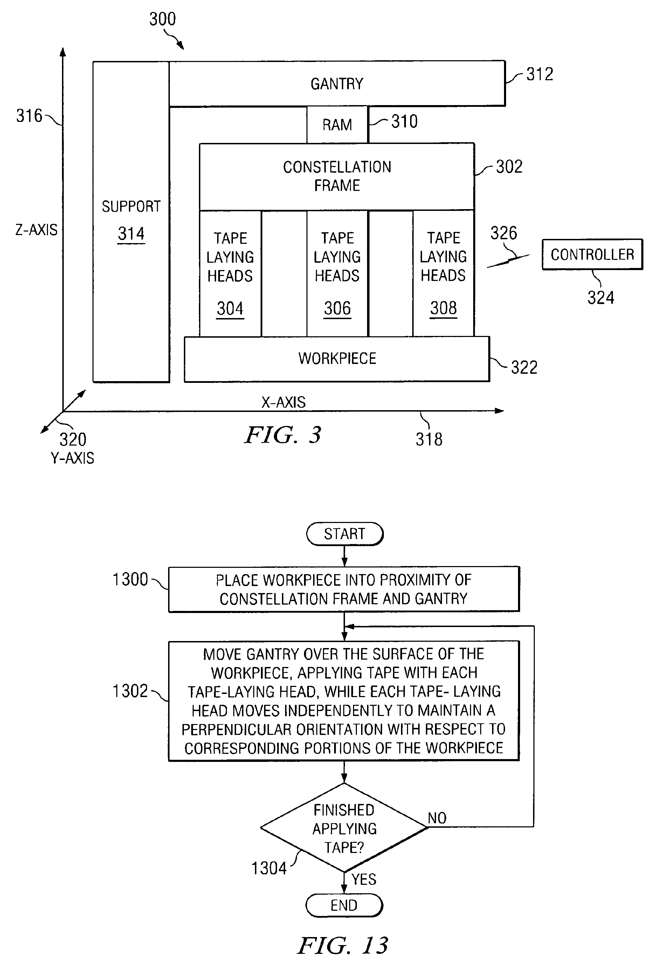

**Figure 3** shows a functional block diagram of a tape-laying machine for use in applying tape to a workpiece, in accordance with an advantageous embodiment. Tape-laying apparatus **300** includes constellation frame **302**, to which may be attached tape-laying head **304**, tape-laying head **306**, and tape-laying head **308**. Tape-laying head **304,** tape-laying head **306**, and tape-laying head **308** can be characterized as first, second, or third tape laying heads, though not necessarily in that order. Ram **310** connects constellation frame **302** to gantry **312**. Gantry **312** is attached to support 314. In an illustrative example, ram **310** can be considered part of tape-laying apparatus **300.** In another illustrative example, both ram **310** and gantry **312** can be considered part of tape-laying apparatus **300**.

In an illustrative example, constellation frame **302** can have five axis motion with respect to gantry **312.** Five axis motion includes one or more of extension upwardly and downwardly along Z axis **316**, translation along Y axis **318** and X axis **330,** pitch motion with respect to gantry **312** (rotation about Y axis **318**), and yaw motion with respect to gantry **312** (rotation about X axis **320**). In another illustrative example, constellation frame **302** can have two axis motion with respect to gantry **312**. In this particular example, two axis motion includes pitch motion with respect to gantry **312,** and yaw motion with respect to gantry **312.** However, tape-laying apparatus **300** can be designed to have any one or more of the described five axes of motion with respect to gantry **312**. In an illustrative example, motion of constellation frame **302** with respect to gantry **312** may be independent of any motion of gantry **312** with respect to support **314.**

In another illustrative embodiment, each of tape-laying head **304**, tape-laying head **306**, and tape-laying head **308** can move independently with respect to each other and with respect to any motion of constellation frame **302,** gantry **312**, or support **314.** For example, each of tape-laying heads **304, 306,** and **308** can have up to five-axis motion with respect to constellation frame **302**. Thus, in one example, each of tape-laying heads **304, 306,** and **308** can move up and down with respect to constellation frame **302**, translate along X and Y axes with respect to constellation frame **302**, pitch with respect to constellation frame **302**, and yaw with respect to constellation frame **302** - all independent of any motion of constellation frame **302** with respect to gantry **312** and independent of any motion of gantry **312** with respect to support **314.** In another illustrative example, each of tape-laying heads **304, 306**, and **308** can have different degrees of freedom of movement. For example, with respect to constellation frame **302**, tape-laying head **304** could have two axis motion, tape-laying head **306** could have three axis motion, and tape-laying head **308** could have five axis motion.

The degrees of freedom present in tape-laying apparatus **300** allow the corresponding facing work surfaces of tape-laying head **304**, tape-laying head **306,** and tape-laying head **308** to be normal to corresponding areas of the surface of work piece **322**. In this manner, tape can be applied evenly and rapidly to the surface of work piece **322.** In this example, workpiece **322** may be considered to be a template, which can be a frame, skeleton, or surface of some object, such as an aircraft component.

In an illustrative example, work piece **322** can be replaced by a mandrel. In this case, a composite lay-up may be produced by laying tape on the mandrel. When the composite lay-up may be completed, the composite lay-up can be removed from the mandrel for further processing.

The motions of each of constellation frame **302**, tape laying head **304,** tape laying head **306,** tape laying head **308**, ram **310**, gantry **312**, and possibly support **314** may be controlled by one or more control devices and/or software programs represented by controller block **324**. One or more components of controller block **324** may be directly, indirectly, or wirelessly connected to any one or more of constellation frame **302**, tape laying head **304**, tape laying head **306**, tape laying head **308**, ram **310,** gantry **312**, and possibly support **314,** as shown by connection representation **326**. The one or more components of controller block **324** may exchange signals with any of the components of tape-laying apparatus **300** in order to provide for feedback control of the motion of those components and of the application of tape to workpiece **322**. The one or more control devices and/or software programs of controller block **324** may be implemented using a variety of devices and computer usable program code, including but not limited to sensors (such as but not limited to sensors for measuring positions of components of tape-laying apparatus **300**, sensors to measuring the amount of dispensed tape, and other sensors), databases, mechanical or electrical linkages, busses, processors, and tape-laying algorithms. The one or more software programs can use input from sensors to implement a feedback loop in order to determine how to apply to tape and/or to determine when to end the tape laying process.

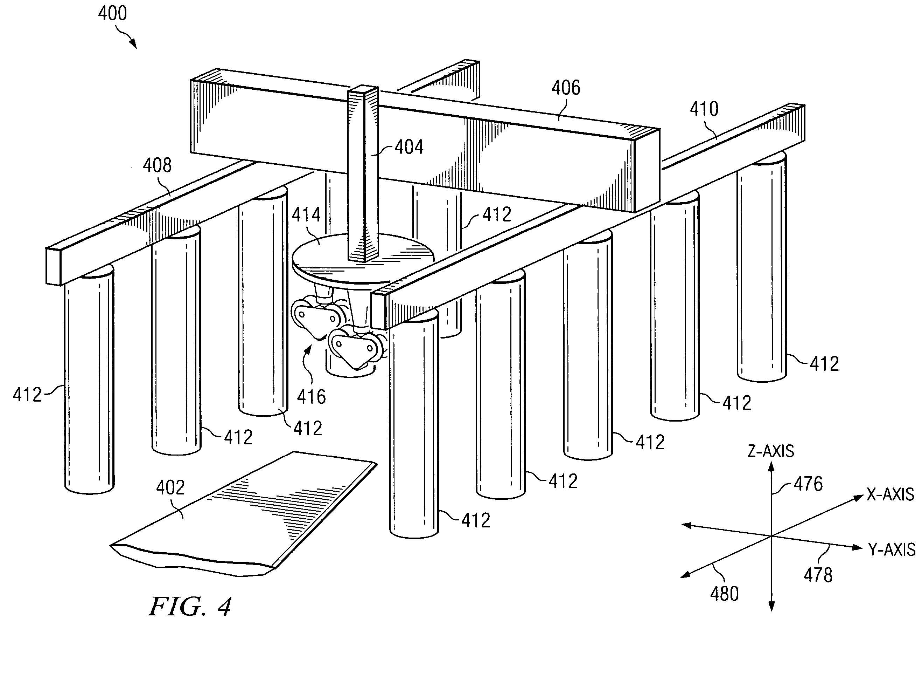

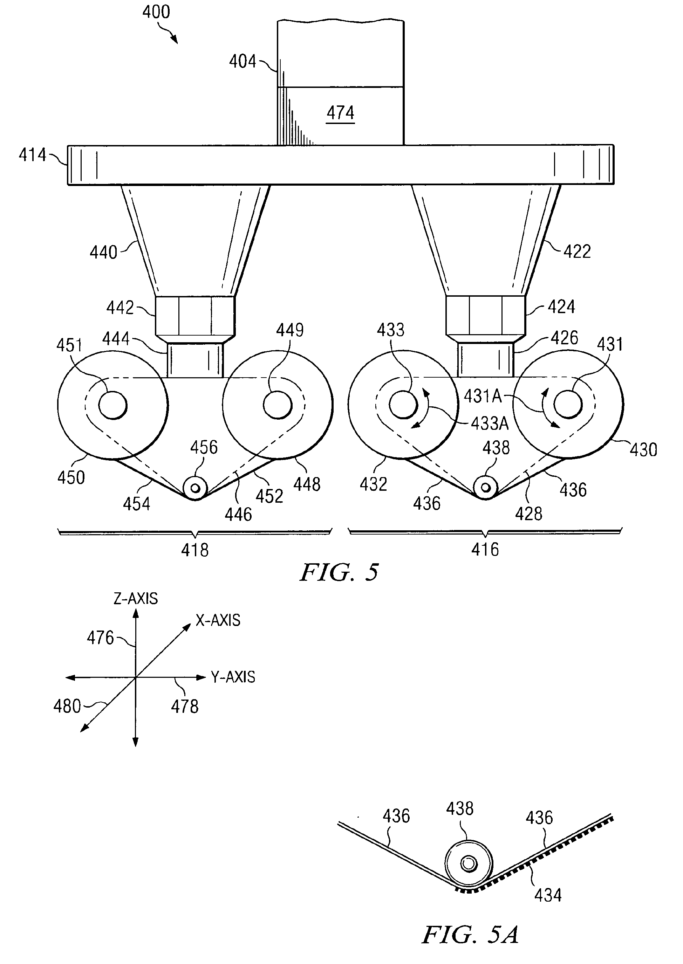

In the following figures, similar reference numerals in different figures refer to the same component. Thus, for example, tape-laying apparatus **400** in **Figure 5** refers to the same tape-laying apparatus **400** shown in **Figure 4**. Tape-laying apparatus **400** can also be referred-to as a tape laminating machine. As used herein, the terms "connect," "mount," "attach," and similar terms mean that a physical connection exists between the described objects; however, such connection could be through or via an intermediate object.

**Figure 4** shows a tape-laying machine for use in applying tape to a workpiece, in accordance with an advantageous embodiment. The tape-laying machine shown in **Figure 4** includes tape-laying apparatus **400** for use in applying tape to workpiece **402.** In this illustrative example, workpiece **402** may be, without limitation, a wing of an aircraft. Workpiece **402** can be characterized as a tool. However, workpiece **402** can be any object upon which tape may be applied.

Tape-laying apparatus **400** may be attached to ram **404**. Ram **404** may be a rod, beam, shaped object, or any other structure suitable for supporting constellation frame **414.** In turn, ram **404** may be attached to gantry 406. Gantry **406** may be a rod, beam, shaped object, or any other structure suitable for supporting ram **404.** Gantry **406** may be slidably attached to first rail **408** and second rail **410** such that gantry **406** can slide back and forth along first rail **408** and second rail **410**. First rail **408** and second rail **410** may be supported by columns **412** or by any other suitable support mechanism. Thus, tape-laying apparatus **400** may be suspended over work piece **402.**

In an illustrative example, workpiece **402** may be itself supported on a column or on some apparatus that can rotate, translate, or otherwise move work piece **402** such that tape-laying apparatus **400** can access every portion of workpiece **402.**

Tape-laying apparatus **400** includes constellation frame **414**, which holds a constellation of tape-laying heads, such as tape-laying head **416.** Constellation frame constellation frame **414**, in the shown illustrative example, may be a disk. However, constellation frame **414** can be any shape or structure suitable for supporting multiple tape-laying heads.

In an illustrative example, constellation frame **414** may be attached to ram **404** in such a manner that constellation frame **414** can have five axis movement, as described with respect to tape-laying apparatus **300** in **Figure 3**. In an illustrative example, constellation frame **414** may be attached to ram **404** such that constellation frame **414** can roll (rotation about Z axis **476**), with respect to ram **404**, thereby creating six-axis movement. In still another illustrative example, constellation frame **414** can translate along the long axis of ram **404** (translation along Z axis **476**). In yet another illustrative example, constellation frame **414** can be attached to ram **404** in such a manner as to allow a combination of two or more of these forms of motion.

Similarly, ram **404** can be attached to gantry **406** in such a manner as to allow ram **404** to translate with respect to one or more of the primary axes of gantry **406.** The primary axes of gantry **406** are Y axis **478** and X axis **480**. Additionally, gantry **406** can be attached to first rail **408** or second rail **410** in such a manner as to allow translation of gantry **406** with respect to one of the primary axes of gantry **406**. Note that Z axis **476** , Y axis **478**, and X axis **480** can be considered first, second, and third axes. The labeling of axes is for convenience only. Any of the axes labels could be interchanged, so long as the corresponding movement is consistent with this description. Thus, possibly, first, second, third, or further tape-laying heads, or together or separately their sub-components, could be characterized as moving along any particular axis. Additionally, polar coordinates or other coordinate systems could be used to describe the movement of any tape laying head or together or separately its sub-components.

**Figure 5** shows a view of a constellation frame for a tape-laying machine, in accordance with an advantageous embodiment. Constellation frame **414** may be shown attached to ram **404** for reference. The relative freedom of tape-laying apparatus **400** to comply with the contour of work piece **402** can be further enhanced using yaw, pitch, and roll rotation assembly **474**. Yaw, pitch, and roll rotation assembly **474** may be attached to constellation frame **414** and ram **404** such that constellation frame **414** can pitch (rotation about Y axis **478**), roll (rotation about Z axis **476**), and/or yaw (rotation about X axis **480**) with respect to ram **404.**

Constellation frame **414** may be used to support a constellation of tape-laying heads, such as tape-laying head **416** and tape-laying head **418**. The term "constellation," as used herein, refers to a grouping of two or more objects, and may be used to refer to two or more tape-laying heads. Placing multiple tape-laying heads onto a single constellation frame **414** allows more tape to be applied to a workpiece, relative to the amount of available area on tape-laying apparatus **400**. In illustrative examples described herein, constellation frame **414** holds three tape-laying heads; however, in other illustrative examples, constellation frame **414** can mount two tape-laying heads, more than two tape-laying heads, or possibly even one tape-laying head.

Each tape-laying head mounted to constellation frame **414** includes a variety of components used for applying or laying tape to workpiece **402.** For example, tape-laying head **416** includes translation and rotation mount **422**, which may be attached to constellation frame **414.** As shown, translation and rotation mount **422** may have a rhomboid shape; however, translation and rotation mount **422** can be any structure of any shape suitable for securing translation and rotation mount **422** to constellation frame **414.** Translation and rotation mount **422** can translate along Y axis **478** and X axis **480** relative to constellation frame **414** and can further rotate about Z axis **476** relative to constellation frame **414**. In this manner, compaction roller **438** can translate and rotate relative to constellation frame **414.** Additionally, the distance between tape-laying head **416** and tape-laying head **418** can be translationally and rotationally varied about one or more of Z axis **476,** Y axis **478**, and X axis **480**, relative to constellation frame **414,** during operation of tape-laying apparatus **400.**

Mount **424** is also attached to translation and rotation mount **422**. Mount **424** provides a convenient coupling mechanism between mount **424** and piston **426.** However, in other illustrative examples, piston **426** can be connected directly to translation and rotation mount **422.**

In an illustrative example, mount **424** may be a hexagonal structure attached to translation and rotation mount **422** such that mount **424** can have five axis movement and/or rotate with respect to translation and rotation mount **422** and constellation frame **414.** However, mount **424** can be any structure of any shape suitable for attaching head frame **428** to translation and rotation mount **422** in such a way as to allow head frame **428** to have five axis motion and/or rotate with respect to translation and rotation mount **422** and constellation frame **414**. In other illustrative examples, mount **424** may be fixedly attached to translation and rotation mount **422.**

In the illustrative example of **Figure 5**, piston **426** is attached to mount **424**. Piston **426** translates up and down along Z axis **476**. Piston **426** is also attached to head frame **428**. Thus, the motion of piston **426** allows compaction roller **438** to be translated along Z axis **476.** Note that the term "piston" is used; however, any desirable mechanism for extending and retracting compaction roller **438** relative to constellation frame **414** can be used in place of piston **426.**

In an illustrative example, one or more of translation and rotation mount **422,** mount **424**, and piston **426** may be excluded from tape-laying head **416.** For example, if a particular type of motion were not needed for an application, then the corresponding component could be excluded. Additionally, other mechanisms for providing five or more axis movement can be provided.

Head frame **428** may be a structure used to support supply reel **430,** spindle **431**, carrier paper take-up reel **432**, and spindle **433**. Spindle **431** and spindle **433** may be attached to head frame **428,** while supply reel **430** and carrier paper take-up reel **432** can be placed onto spindle **431** and spindle **433**, respectively. Supply reel **430** may be used to hold a reel of tape **434**. In an illustrative example, one side of tape **434** may be attached to carrier paper **436** in order to facilitate operation of tape-laying apparatus **400**. Carrier paper **436** may be threaded under compaction roller **438** and thence may be attached to carrier paper take-up reel **432**. Tape **434** can be considered any of first, second, or third tapes, with each tape laying head having one or more sections of tape. Carrier paper **436** can be considered any of first, second, or third carrier papers, with each tape laying head having one or more sections of carrier paper.

In use, tape **434** may be applied to work piece **402** using compaction roller **438.** The surface of tape **434** opposite the surface abutting carrier paper **436** may be applied to workpiece **402**. As tape-laying head 416 moves along the surface of workpiece **402,** supply reel **430** unwinds tape **434** so that continuing movement of tape-laying head **416** applies more tape to workpiece **402.** Carrier paper take-up reel **432** takes up the remaining carrier paper **436**, resulting in carrier paper **436** being wound around carrier paper take-up reel **432**. Compaction roller **438** facilitates operation of tape-laying head **416** by allowing carrier paper **436** to smoothly roll under the apex of head frame **428.** In this manner, supply reel **430** and carrier paper take-up reel **432** can each rotate rapidly **431A** and **433A** about spindle **431** and spindle **433,** respectively, in order to rapidly apply tape to workpiece **402.**

Tape-laying head **418** may have a similar structure to tape-laying head **416**. Thus, for example, translation and rotation mount **440** can be attached to constellation frame **414.** In this manner, the distance between tape-laying head **416** and tape-laying head **418** can be varied during operation of tape-laying apparatus **400.** In an illustrative example, the motion of translation and rotation mount **440** relative to constellation frame **414** may be independent of the motion of translation and rotation mount **422** relative to constellation frame **414.** Translation and rotation mount **440** can be attached to mount **442** in such a manner as to allow mount **442** to have five axis motion and/or rotate with respect to translation and rotation mount **440** and constellation frame **414.** Translation and rotation mount **422,** mount **424,** and translation and rotation mount **440** can be characterized as first, second, and third mounts, though not necessarily in that order.

Piston **444** may be attached to mount **442** such that head frame **446** can move inwardly and outwardly with respect to mount **442**, translation and rotation mount **440,** and constellation frame **414** (the long axis of tape-laying head **418**). Piston **444** may be attached to head frame **446.** Supply reel **448** may be removably attached to spindle **449,** which may be in turn attached to head frame **446**. Carrier paper take-up reel **450** may be removably attached to spindle **451,** which may be in turn attached to head frame **446.** Tape **452,** together with carrier paper **454,** may be attached to supply reel **448.** Carrier paper **154** may be threaded under compaction roller **456** and may be thence attached to carrier paper take-up reel **450** such that carrier paper take-up reel **450** can take up carrier paper **454** as tape **452** may be applied to workpiece **402.**

Tape-laying head **418** operates in a similar manner to tape-laying head **416**. However, each component of tape-laying head **418** can operate independently of each component tape-laying head **416**. In this manner, tape-laying head **416** and tape-laying head **418** can each move such that each individual tape-laying head may be placed normal (perpendicular) to a contoured, perhaps irregular, surface of work piece **402.** If desired, each individual tape-laying head may be placed at any desired angle with respect to a contoured, perhaps irregular, surface of work piece **402.**

In an illustrative example, the operational speeds of supply reel **430** and carrier paper take-up reel **432** may be substantially the same as the operational speeds of supply reel **448** and carrier paper take-up reel **450.** In this manner, tape-laying head **416** may run out of tape **434** at the same time that tape-laying head **418** runs out of tape **452**, assuming that the amount and type of tape on supply reel **430** may be the same as the amount and type of tape on supply reel **448.** However, in other illustrative examples, the operational speeds of these components can be independent of each other. In an illustrative embodiment, the operational speeds of tape-laying heads **416** and **418** are varied independently so that each corresponding supply real is expended at about the same time, or closely in time. In this manner, all reels can be replaced at once to increase the efficiency of the tape-laying operation.

**Figure 5A** shows a magnified portion of a tape laying head shown in **Figure 5****,** in accordance with an advantageous embodiment. Compaction roller **438** in **Figure 5A** is the same as compaction roller **438** of tape-laying head **416** shown in **Figure 5**. Similarly, the other reference numerals in **Figure 5A** correspond to similar reference numerals in **Figure 5**.

As shown in **Figure 5A**, tape **434** is peeled from carrier paper **436** as tape **434** moves around compaction roller **438**. In this manner, tape is applied to the surface of a workpiece.

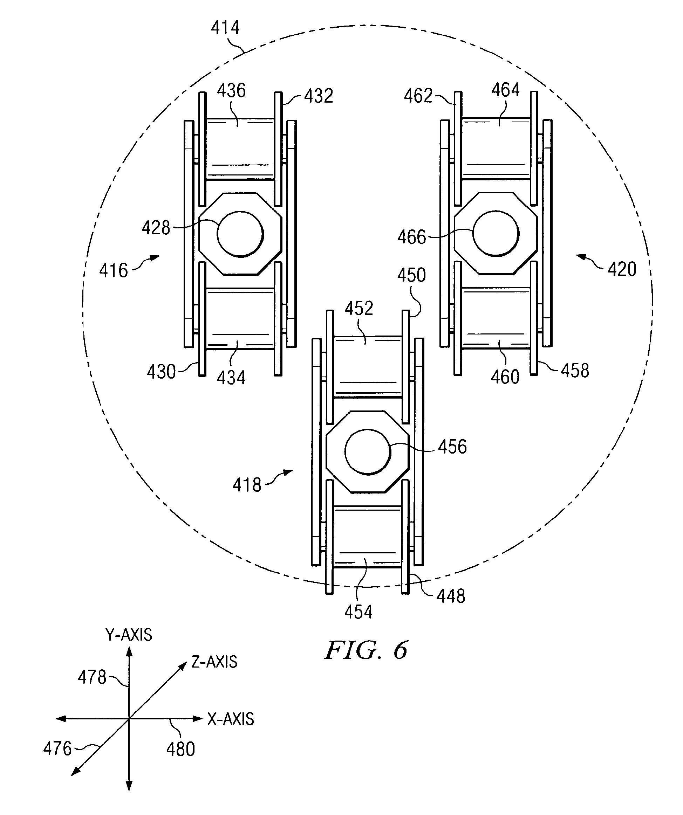

**Figure 6** shows a view of a constellation frame for a tape-laying machine, in accordance with an advantageous embodiment. Z axis **476**, Y axis **478,** and X axis **480** are shown for reference. Note that Z axis **476** and Y axis **478** appear to be reversed with respect to each other relative to **Figure 5** in order to show a different view of tape-laying apparatus **400**.

In this illustrative example, constellation frame **414** supports three tape-laying heads, tape-laying head **416**, tape-laying head **418**, and tape-laying head **420**. Tape-laying head **416**, tape-laying head **418**, and tape-laying head **420** can be characterized as first, second, and third tape-laying heads, but not necessarily in that order. Each of these tape-laying heads can operate independently of each other, in the manner described with respect to **Figure 5**.

Thus, tape-laying head **420** operates independently of tape-laying head **416** and tape-laying head **418.** Like the other two tape-laying heads, tape-laying head **420** includes supply reel **458** and carrier paper take-up reel **462.** Carrier paper **464**, together with tape **460**, may be wound around supply reel **458**. Carrier paper **464** may be threaded under compaction roller **466**, and thence may be attached to carrier paper take-up reel **462**. The operation of tape-laying head **420** may be similar to the operation of tape-laying head **418** and tape-laying head **416.** Note that supply reel **430**, supply reel **448,** and supply reel **458** can be considered first, second, and third supply reels, though not necessarily in that order. Note that carrier paper take-up reel **432,** carrier paper take-up reel **450,** and carrier paper take-up reel **462** can be characterized as first, second, and third carrier paper take-up reels, though not necessarily in that order.

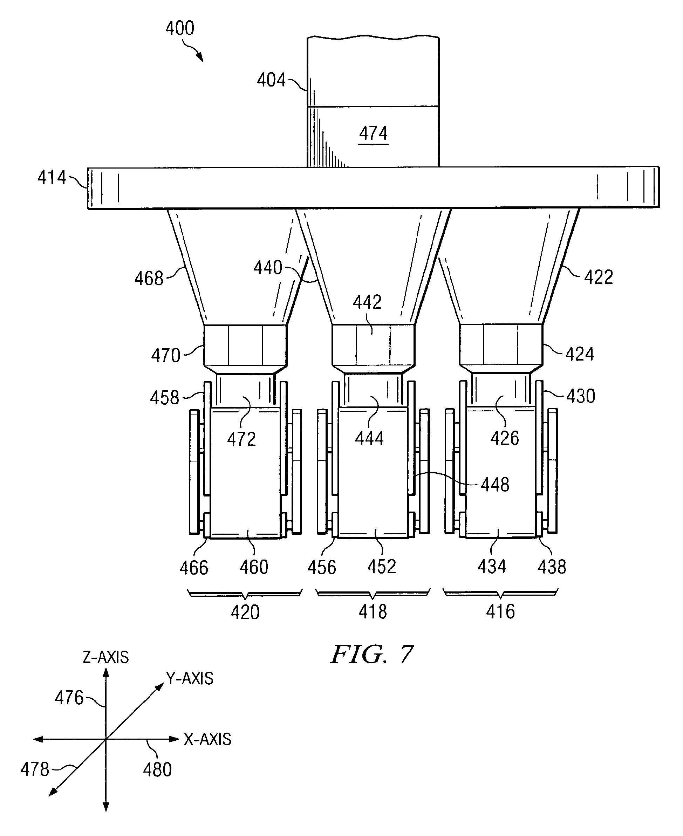

**Figure 7** shows a view of a constellation frame for a tape-laying machine, in accordance with an advantageous embodiment. Z axis **476**, Y axis **478**, and X axis **480** are shown for reference. Note that Y axis **478** and X axis **480** appear to be reversed with respect to each other relative to **Figure 5** in order to show a different view of tape-laying apparatus **400.**

Similarly, ram **404** and yaw, pitch, and roll rotation assembly **474** are shown for reference. Constellation frame **414** supports three tape-laying heads, tape-laying head **416**, tape-laying head **418,** and tape-laying head **420.** **Figure 7** shows that tape-laying head **420,** like the other two tape-laying heads, includes translation and rotation mount **468** attached to constellation frame **414**. Mount **470** can be attached to translation and rotation mount **468** such that mount **470** can have five axis motion and/or rotate with respect to constellation frame **414**. Piston **472** can be attached to mount **470** such that piston **472** can translate along the long axis of tape-laying head **420** with respect to translation and rotation mount **468**, mount **470,** and constellation frame **414.** Tape-laying head **416** facilitates the application of tape **460** to workpiece **402** by allowing carrier paper **464** to roll smoothly under the apex of tape-laying head **420.** Piston **426,** piston **444,** and piston **472** can be characterized as first, second, and third pistons, though not necessarily in that order.

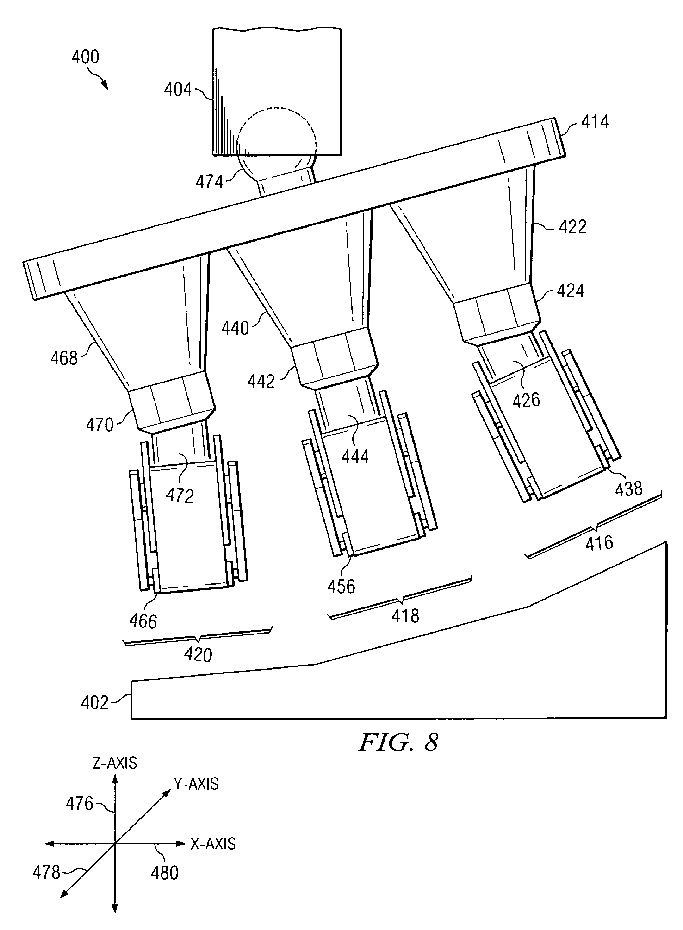

**Figure 8** shows a view of a constellation frame for a tape-laying machine, in accordance with an advantageous embodiment. Z axis **476,** Y axis **478,** and X axis **480** are shown for reference. Note that Y axis **478** and X axis **480** appear to be reversed with respect to each other relative to **Figure 5** in order to show a different view of tape-laying apparatus **400**.

Specifically, **Figure 8** shows the independent operation of each tape-laying head on constellation frame **414.** Thus, for example, tape-laying head **416**, tape-laying head **418**, and tape-laying head **420** each may have a different orientation with respect to constellation frame **414.** The term "orientation" refers to relative positions among two or more objects relative to Z axis **476,** Y axis **478,** and X axis **480**. Additionally, each compaction roller may be at a different distance along the long axis of the respective tape-laying heads, with respect to constellation frame **414**. Thus, each compaction roller, compaction roller **438,** compaction roller **456**, and compaction roller **466**, may be oriented perpendicular to (or normal to) a corresponding portion of the surface of workpiece **402**. Compaction roller **438**, compaction roller **456,** and compaction roller **466** may be considered first, second, and third compaction rollers, though not necessarily in that order.

In use, the orientation of each of tape-laying head **416,** tape-laying head **418,** and tape-laying head **420** can change with respect to constellation frame **414** so that each corresponding compaction roller remains normal to whatever portion of the surface of workpiece **402** happens to be facing the corresponding compaction roller. In other words, the independent motion of the three tape-laying heads allows tape to be applied evenly and smoothly over the surface of workpiece **402**, even if the surface of workpiece **402** may be curved and/or irregular. Stated still differently, each of tape-laying head **416,** tape-laying head **418**, and tape-laying head **420** can simultaneously have different orientations with respect to each other, different orientations with respect to constellation frame **414**, and different orientations with respect to ram **404**.

Additionally, because several tape-laying heads may be simultaneously mounted on constellation frame **414,** the total quantity of tape per unit time that can be laid on workpiece **402** may be substantially increased relative to known tape-laying machines. The increased time efficiency reduces the time and cost of the process of applying tape to workpiece **402.**

To further increase this efficiency, the spacing of the tape-laying heads with respect to each other can be made relatively narrow. In an illustrative example, the distance between tape-laying heads may be about equal to or less than the width of the tape which each tape-laying head holds. The term "about," as used herein, means that the value in question can be varied somewhat, less than or equal to 50% to 200% of the original quantity. Thus, for example, the distance between tape-laying heads can be somewhat larger than the width of the tape to be applied to work piece **402**, to within 200% of the width of the tape. In another illustrative example, the distance between tape-laying heads can be greater than the width of the tape to be applied to workpiece **402.**

To further increase tape-laying efficiency, the tape can be pre-cut. Note that the tape itself may be pre-cut, but the backing paper may not be pre-cut. Pre-cut tape rolled onto a supply reel can be referred-to as cassetted tape. By pre-cutting the tape at selected, pre-determined lengths along the supply reel, tape need not be cut by the tape-laying apparatus itself. Thus, tape can be applied more quickly and more evenly. Additionally, the tape-laying apparatus may be simpler if the tape-laying apparatus does not need a tape cutting tool or tape cutting assembly of parts.

To further increase tape-laying efficiency, the amount of tape on each supply reel can be individually adjusted so that all supply reels will run out of tape at about the same time. In this manner, all supply reels and carrier paper take-up reels can be replaced at the same time. Accordingly, a tape-laying machine need only be stopped once to replace all supply reels and carrier paper take-up reels.

In the case where one or more of tape-laying head **416,** tape-laying head **418**, and tape-laying head **420** are attached to constellation frame **414**, the distance between each tape-laying head relative to the other tape-laying heads can vary during operation of tape-laying apparatus **400.** In this case, the distance between tape-laying head **416** and tape-laying head **418** can be different than the distance between tape-laying head **416** and tape-laying head **420.** In this illustrative embodiment, the distance between any two tape-laying heads can vary and need not be set to any pre-determined distance.

The relative freedom of tape-laying apparatus **400** to comply with the contour of workpiece **402** can be further enhanced using yaw, pitch, and roll rotation assembly **474.** Yaw, pitch, and roll rotation assembly **474** may be attached to constellation frame **414** and ram **404** such that constellation frame **414** can yaw (rotation about X axis **480**), pitch (rotation about Y axis **478**), and/or roll (rotation about Z axis **476**) with respect to ram **404.**

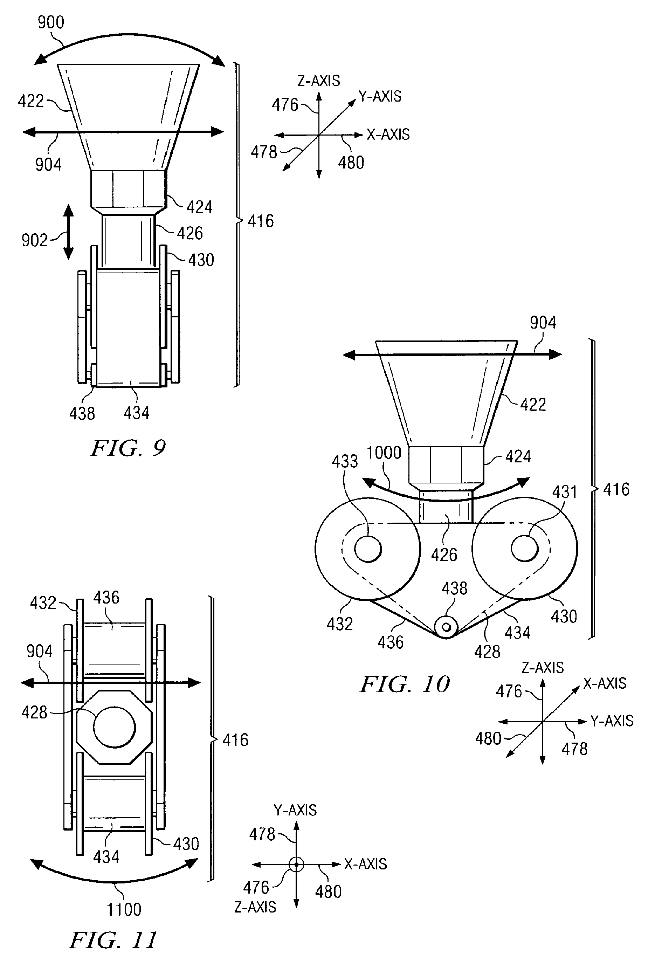

**Figure 9** shows a view of a tape-laying head for a constellation frame for a tape-laying machine, in accordance with an advantageous embodiment. Z axis **476,** Y axis **478**, and X axis **480** are shown for reference. Note that Y axis **478** and X axis **480** appear to be reversed with respect to each other relative to Figure 5 in order to show a different view of tape-laying apparatus **400.**

Tape-laying head **416** corresponds to tape-laying head **416** shown in **Figure 5****.** **Figure 9** shows how translation and rotation mount **422** and mount 424 can perform roll rotation (about Y axis **478**), as shown by arrows **900.** This roll rotation may be used to maintain compaction roller **438** normal (perpendicular) to a work piece.

Similarly, **Figure 9** shows how piston **426** can translate compaction roller **438** along Z axis **476.** Lateral translational movement (along Y axis **478**), as shown by arrows **904**, is used to compensate for roll rotation **900** to keep the pitch of tape application consistent. This motion may be used to maintain compaction roller **438** normal (perpendicular) to a work piece.

Supply reel **430**, tape **434**, and compaction roller **438** are shown for reference. The remaining features are shown for reference, with reference numerals in **Figure 9** corresponding to similar features in tape-laying head **416** of **Figure 5****.**

**Figure 10** shows a view of a tape-laying head for a constellation frame for a tape-laying machine, in accordance with an advantageous embodiment. Z axis **476,** Y axis **478**, and X axis **480** are shown for reference. Note that the orientation of the three axes are the same as the orientation of the three axes shown in **Figure 5****.**

Tape-laying head **416** corresponds to tape-laying head **416** shown in **Figure 5** and **Figure 9. Figure 10** shows how translation and rotation mount **422** and mount **424** can perform pitch rotation (rotation about X axis **480**), as shown by arrows **1000.** Translational motion (along Y axis **478**), as with **Figure 9****,** is shown by arrows **904**. These motions may be used to maintain compaction roller **438** normal (perpendicular) to a work piece.

Supply reel **430**, carrier paper take-up reel **432,** tape **434,** carrier paper **436,** and compaction roller **438** are shown for reference. The remaining features are shown for reference, with reference numerals in **Figure 10** corresponding to similar features in tape-laying head **416** of **Figure 5****.**

**Figure 11** shows a view of a tape-laying head for a constellation frame for a tape-laying machine, in accordance with an advantageous embodiment. Z axis **476**, Y axis **478**, and X axis **480** are shown for reference. Note that Y axis **478** and Z axis **476** appear to be reversed with respect to each other relative to **Figure 5** in order to show a different view of tape-laying apparatus **400**.

Tape-laying head **416** corresponds to tape-laying head **416** shown in **Figure 5**, **Figure 9,** and **Figure 10.** Figure 11 shows that translation and rotation mount **422** and mount **424** can perform yaw motion (rotation about Z axis **476**), as shown by arrows **1100.** Translational motion (along X axis **480**), as with **Figure 9** and **Figure 10** is shown by arrows **904.** These motions may be used to maintain compaction roller **438** normal (perpendicular) to a work piece.

Supply reel **430,** carrier paper take-up reel **432,** tape **434,** carrier paper **436**, and compaction roller **438** are shown for reference. The remaining features are shown for reference, with reference numerals in **Figure 11** corresponding to similar features in tape-laying head **416** of **Figure 5****.**

Together, **Figure 4** through **Figure 11** show an apparatus for laying tape on work piece **402** using a five or more axis tape-laying apparatus. The tape-laying apparatus can include gantry **406** with dimensions that exceed outer dimensions of the work piece **402.** A cluster of three or more tape-laying heads (**416, 418**, and **420**) attaches to the gantry **406** via constellation frame **414,** the cluster being a multi-head array (4**16, 418**, and **420**). The connection between the multi-head array (**416, 418,** and **420**) and the gantry **406** may have translational, vertical, and rotational capability for moving the tape-laying heads normal to a surface of the work piece **402**. This connection can be the connections among ram **404,** constellation frame **414,** translation and rotation mount **422,** mount **424,** piston **426**, and head frame **428**. Note that either head frame **428** or head frame **446** can be characterized as first and second head frames, but not necessarily in that order.

Each of the three or more tape-laying heads may have further movement capability to allow independent movement of each of the tape-laying heads. Independent movement of the tape-laying heads allows for fine-tuned motion to match a contour of the work piece.

The three or more tape-laying heads may be in proximity to one another such that each tape-laying head may be within a distance approximately equal to a width of a tape, or multiple widths of tape, which a corresponding tape-laying head is designed to hold. Each of the three or more tape-laying heads may be self contained, with each of the three or more tape-laying heads having a corresponding different supply of tape.

Together, **Figure 4** through **Figure 11** show an apparatus **400** for laying tape on a workpiece **402.** The apparatus includes a constellation frame **414**. The apparatus further includes a first tape-laying head **416** having a first translation and rotation mount **422** attached to the constellation frame **414** and a first compaction roller **428** attached to the first translation and rotation mount **422** such that the first compaction roller **428** can move along multiple axes and/or rotate with respect to the first translation and rotation mount **422.** For example, mount **424** can be attached to translation and rotation mount **422** to allow such motion.

The apparatus further includes a second tape-laying head **418** having a second translation and rotation mount **440** attached to the constellation frame **414** and a second compaction roller **456** attached to the second translation and rotation mount **440** such that the second compaction roller 456 can move along multiple axes and/or rotate with respect to the second translation and rotation mount **440** independently of the first tape-laying head **416.** For example, mount **442** can be attached to translation and rotation mount **440** to allow such motion.

The various components described with respect to **Figure 3** through **Figure 11** can be characterized as "first," "second," "third," etc., in order to identify different objects. For example, mount **440** can be characterized as a "first mount" and mount **442** can be characterized as a "second mount."

In this manner, the illustrative embodiments provide for an apparatus for laying tape on a workpiece, the apparatus comprising: a constellation frame; a first tape-laying head comprising a first compaction roller attached to constellation frame such that the first compaction roller can have five axis movement with respect to the constellation frame; and a second tape-laying head comprising a second compaction roller attached to the constellation frame such that the second compaction roller can have five axis movement with respect to the constellation frame independent of the first tape-laying head. In an illustrative example, the first tape-laying head and the second tape-laying head are separated by a distance about equal to one of a width of a tape and a multiple of the width, wherein the tape may be usable by at least one of the first tape-laying head and the second tape-laying head.

In another illustrative example, the first tape-laying head further comprises a first mount attached to the constellation frame and to a second mount. In yet another illustrative example, the first tape-laying head further comprises a first piston attached to the second mount and to the first compaction roller such that the first piston can move along a first axis relative to the second mount, wherein the second tape-laying head further comprises a third mount attached to the constellation frame and to a fourth mount, wherein the second tape-laying head further comprises a second piston attached to the third mount and to the second compaction roller such that the second piston can move along a second axis relative to the third mount, and wherein movement of the first piston may be independent of movement of the second piston.

In yet another illustrative example, the first tape-laying head further comprises a first head frame attached to the first compaction roller, a first supply reel attached to the first head frame, and a first carrier paper take-up reel attached to the first head frame, and
wherein the second tape-laying head further comprises a second head frame attached to the second compaction roller, a second supply reel attached to the second head frame, and a second carrier paper take-up reel attached to the second head frame. Still further, this apparatus can comprise a first tape attached to the first supply reel such that the first tape can unroll from the first supply reel, wherein the first tape further comprises first carrier paper attached to the first tape, and wherein the first carrier paper may be threaded under the first compaction roller and thence attached to the first carrier paper take-up reel; and a second tape attached to the second supply reel such that the second tape can unroll from the second supply reel, wherein the second tape further comprises second carrier paper attached to the second tape, and wherein the second carrier paper may be threaded under the second compaction roller and thence attached to the second carrier paper take-up reel.

In another illustrative example, the apparatus includes a ram attached to the constellation frame such that the constellation frame can pitch, yaw and rotate with respect to the ram. In this apparatus, a gantry can be attached to the ram such that the ram can move along the gantry.

In yet another illustrative example, the apparatus includes at least one rail attached to the gantry such that the gantry can move along at least one rail. In this apparatus, at least one column can support the at least one rail. Additionally, the apparatus can comprise a workpiece disposed with respect to the at least one column such that at least one tape-laying head of the constellation frame can touch the workpiece. Alternatively or in addition, the apparatus can comprise a column attached to and supporting the ram.

In another illustrative example, the ram may be attached to the column such that the ram can rotate with respect to the column. In this apparatus, the ram may be attached to the column such that the ram can move translate with respect to the column.

In an illustrative method, tape may be laid on the workpiece using an apparatus, the apparatus comprising: a constellation frame; and a plurality of tape-laying heads attached to the constellation frame such that each of the plurality of tape-laying heads independently rotate, pitch, yaw, and translate with respect to the constellation frame. The method may further include controlling laying of tape on the workpiece using a controller block.

In another illustrative example, the plurality of tape-laying heads are further attached to the constellation frame such that the plurality of tape-laying heads further independently move along corresponding independent axes with respect to the constellation frame. Still further, the work piece comprises a contoured surface and wherein each of the plurality of tape-laying heads moves independently along the corresponding independent axes such that ones of the plurality of tape-laying heads are perpendicular to corresponding portions of the contoured surface.

In another illustrative example, the method includes moving a gantry, the gantry attached to the constellation frame, such that the apparatus moves over the contoured surface. In yet another illustrative example, for each tape-laying head, rotation movement, pitch movement, yaw movement, and translation movement are independently performed with respect to the constellation frame while laying tape. In this illustrative method, the method can further include performing rotation movement, pitch movement, yaw movement, and translation movement with the constellation frame, wherein movement of the constellation frame is independent of movement of each of the plurality of tape-laying heads. In yet another illustrative example, controlling laying of tape comprises using a software program and sensors to implement a feedback loop to determine how tape is laid and to determine when to end laying of tape.

Another illustrative apparatus for laying tape on a tool is included. This illustrative apparatus comprises a gantry machine with at least one axis of travel that exceeds outer dimensions of the tool; a ram connected to the gantry machine, wherein the ram is capable of translational movement with respect to the gantry machine; a cluster of three or more tape-laying heads attached to the ram, the cluster comprising a multi-head array, wherein corresponding ones of the three or more tape-laying heads can maintain corresponding perpendicular orientations to corresponding portions of a surface of the tool on which the tape is laid; wherein each of the three or more tape-laying heads further has movement capability to allow movement of each of the three or more tape-laying heads to be fine-tuned individually depending on a contour of the tool; wherein the three or more tape-laying heads are in proximity to one another such that each tape-laying head is within a distance equal to or less than about a width of a tape, or multiple widths of tape, which a corresponding tape-laying head is designed to hold; and wherein each of the three or more tape-laying heads is self contained, with each of the three or more tape-laying heads having a corresponding different supply of tape.

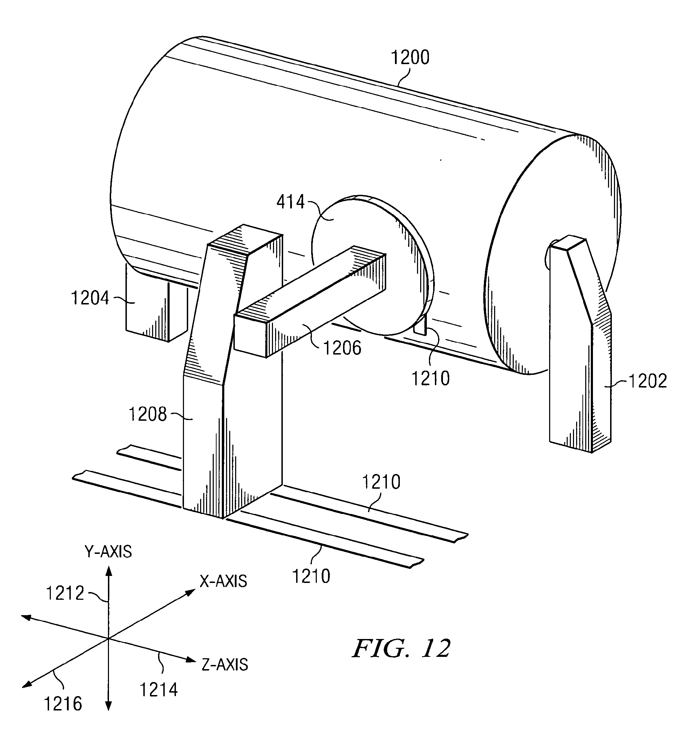

**Figure 12** shows a tape-laying machine for use in applying tape to a workpiece, in accordance with an advantageous embodiment. The arrangement shown in **Figure 12** shows that constellation frame **414** can be attached to different support configurations in order to create different tape-laying apparatuses, relative to tape-laying apparatus **400.** Y axis **1212**, Z axis **1214**, and X axis **1216** are shown for reference.

In this illustrative embodiment, the tape-laying heads may be attached to the side of constellation frame **414** facing mandrel **1200.** The structure of constellation frame **414** may be similar to that shown in **Figure 4** through **Figure 11****.**

Mandrel **1200** may be supported by tail stock **1202** and head stock **1204**. Mandrel **1200** can rotate about the long axis of mandrel **1200** (corresponding to Z axis **1214** in the illustrative example of **Figure 12**). As mandrel **1200** rotates, the tape-laying heads on constellation frame **414** apply tape **1210** to mandrel **1200** in order to form a composite lay-up (not shown). Ultimately, when the composite lay-up is complete, the composite lay-up can be removed from mandrel **1200** for further processing.

Constellation frame **414** may be supported by ram **1206**, which in turn may be supported by column **1208.** Constellation frame **414** can be mounted to ram **1206** such that constellation frame **414** can perform one or more of rotation, pitch, yaw, or translation with respect to ram **1206.** Similarly, ram **1206** can be mounted to column **1208** such that ram **1206** can translate vertically and/or horizontally with respect to column **1208.** Column **1208** can translate along rails **1210.**

As described with respect to **Figure 4** through **Figure 11****,** each tape-laying head can move independently of each other with respect to constellation frame **414**. In this manner, if mandrel **1200** had a more irregular shape, a corresponding orientation each of the tape-laying heads on constellation frame **414** can be adjusted so that each tape laying head may be normal to, or have any desired angle with respect to, a corresponding portion of the surface of mandrel **1200.** The various components shown in **Figure 12** can be controlled using a controller mechanism, such as controller block **324** shown in **Figure 3****.**

**Figure 13** shows a flowchart illustrating a process of operating a tape-laying machine, in accordance with an advantageous embodiment. Initially, a work piece is placed into proximity of a constellation frame and gantry (operation **1300**). The gantry then moves over the surface of the workpiece, applying tape with each tape-laying head, while each tape-laying head moves independently to maintain a perpendicular orientation with respect to corresponding portions of the work piece (operation 1302).

A software program then makes a determination whether the process of applying tape is finished (operation **1304**). A "no" determination results in the process returning to operation **1302** and the tape-laying process continuing. A "yes" determination results in the process terminating.

The software program can take the form of an entirely hardware embodiment, an entirely software embodiment, or an embodiment containing both hardware and software elements. The software program may be implemented as firmware, resident software, microcode, or other forms.

Furthermore, the software program can take the form of a computer program product accessible from a computer-usable or computer-readable medium providing program code for use by or in connection with a computer or any instruction execution system. For the purposes of this description, a computer-usable or computer readable medium can be any tangible apparatus that can contain, store, communicate, propagate, or transport the program for use by or in connection with the instruction execution system, apparatus, or device.

The medium can be an electronic, magnetic, optical, electromagnetic, infrared, or semiconductor system, or a propagation medium. The medium also may be physical medium or tangible medium on which computer readable program code can be stored. Examples of a computer-readable medium include a semiconductor or solid state memory, magnetic tape, a removable computer diskette, a random access memory (RAM), a read-only memory (ROM), a rigid magnetic disk, an optical disk, or some other physical storage device configured to hold computer readable program code. Current examples of optical disks include compact disk - read only memory (CD-ROM), compact disk - read/write (CD-R/W) and DVD.

Further, a computer storage medium may contain or store a computer readable program code such that when the computer readable program code is executed on a computer, the execution of this computer readable program code causes the computer to transmit another computer readable program code over a communications link. This communications link may use a medium that is, for example without limitation, physical or wireless.

A data processing system suitable for storing and/or executing program code will include at least one processor coupled directly or indirectly to memory elements through a system bus. The memory elements can include local memory employed during actual execution of the program code, bulk storage, and cache memories which provide temporary storage of at least some program code in order to reduce the number of times code must be retrieved from bulk storage during execution.

Input/output or I/O devices (including but not limited to keyboards, displays, pointing devices, etc.) can be coupled to the system either directly or through intervening I/O controllers. Network adapters may also be coupled to the data processing system to enable the data processing system to become coupled to other data processing systems or remote printers or storage devices through intervening private or public networks. Modems, cable modem and Ethernet cards are just a few of the currently available types of network adapters.

Thus, an embodiment of the present disclosure provides for a method for laying tape on a workpiece **402.** Tape may be laid on the workpiece **402** using an apparatus, such as the tape-laying apparatuses shown in **Figure 4** through **Figure 10****.** The apparatus used to lay the tape includes a constellation frame **414**. The apparatus used to lay the tape also includes a plurality of tape-laying heads (such as, but not limited to **416, 418**, and **420**) attached to the constellation frame such that each of the plurality of tape-laying heads independently have five axis movement-with respect to constellation frame **414** and further independently move along corresponding independent axes with respect to the constellation frame **414**. For example, pistons (such as, but not limited to, piston **426,** piston **444**, and piston **472**) can be used to allow motion of the tape-laying heads to move along corresponding independent axes with respect to the constellation frame **414**. In another example, rotatably and/or translatably attached pods (such as, but not limited to, translation and rotation mount **422** and mount **424**) can allow the tape-laying heads to independently translate and/or rotate with respect to constellation frame **414.**

Further degrees of freedom of movement can be achieved in order to allow each tape-laying head to achieve an orientation normal to a corresponding surface of the workpiece or mandrel. For example, the method can also include moving a gantry, the gantry attached to the constellation frame, such that the apparatus moves over the contoured surface.

The description of the different advantageous embodiments may have been presented for purposes of illustration and description, and may be not intended to be exhaustive or limited to the embodiments in the form disclosed. Many modifications and variations will be apparent to those of ordinary skill in the art. Further, different advantageous embodiments may provide different advantages as compared to other advantageous embodiments. The embodiment or embodiments selected may be chosen and described in order to best explain the principles of the embodiments, the practical application, and to enable others of ordinary skill in the art to understand the disclosure for various embodiments with various modifications as may be suited to the particular use contemplated.

## Claims

1. An apparatus for laying tape on a workpiece, the apparatus comprising:
a constellation frame;
a first tape-laying head comprising a first compaction roller attached to constellation frame such that the first compaction roller can have five axis movement with respect to the constellation frame; and
a second tape-laying head comprising a second compaction roller attached to the constellation frame such that the second compaction roller can have five axis movement with respect to the constellation frame independent of the first tape-laying head.

2. The apparatus of claim 1 wherein the first tape-laying head and the second tape-laying head are separated by a distance about equal to one of a width of a tape and a multiple of the width, wherein the tape is usable by at least one of the first tape-laying head and the second tape-laying head.

3. The apparatus of claim 1 wherein the first tape-laying head further comprises a first mount attached to the constellation frame and to a second mount.

4. The apparatus of claim 3 wherein the first tape-laying head further comprises a first piston attached to the second mount and to the first compaction roller such that the first piston can move along a first axis relative to the second mount, wherein the second tape-laying head further comprises a third mount attached to the constellation frame and to a fourth mount, wherein the second tape-laying head further comprises a second piston attached to the third mount and to the second compaction roller such that the second piston can move along a second axis relative to the third mount, and wherein movement of the first piston is independent of movement of the second piston.

5. The apparatus of claim 4 wherein the first tape-laying head further comprises a first head frame attached to the first compaction roller, a first supply reel attached to the first head frame, and a first carrier paper take-up reel attached to the first head frame, and wherein the second tape-laying head further comprises a second head frame attached to the second compaction roller, a second supply reel attached to the second head frame, and a second carrier paper take-up reel attached to the second head frame.

6. The apparatus of claim 5 further comprising:
a first tape attached to the first supply reel such that the first tape can unroll from the first supply reel, wherein the first tape further comprises first carrier paper attached to the first tape, and wherein the first carrier paper is threaded under the first compaction roller and thence attached to the first carrier paper take-up reel; and
a second tape attached to the second supply reel such that the second tape can unroll from the second supply reel, wherein the second tape further comprises second carrier paper attached to the second tape, and wherein the second carrier paper is threaded under the second compaction roller and thence attached to the second carrier paper take-up reel.

7. The apparatus of claim 1 further comprising:
a ram attached to the constellation frame such that the constellation frame can pitch, yaw and rotate with respect to the ram;
a gantry attached to the ram such that the ram can move along the gantry;
at least one rail attached to the gantry such that the gantry can move along at least one rail;at least one column supporting the at least one rail; and
a workpiece disposed with respect to the at least one column such that at least one tape-laying head of the constellation frame can touch the workpiece.

8. The apparatus of claim 1 further comprising:
a ram attached to the constellation frame such that the constellation frame can pitch, yaw and rotate with respect to the ram;
a gantry attached to the ram such that the ram can move along the gantry a column attached to and supporting the ram, wherein the ram is attached to the column such that the ram can rotate with respect to the column.

9. A method for laying tape on a workpiece, the method comprising:
laying tape on the workpiece using an apparatus, the apparatus comprising:
a constellation frame; and
a plurality of tape-laying heads attached to the constellation frame such that each of the plurality of tape-laying heads independently rotate, pitch, yaw, and translate with respect to the constellation frame; and;
controlling laying of tape on the workpiece using a controller block.

10. The method of claim 9 wherein the plurality of tape-laying heads are further attached to the constellation frame such that the plurality of tape-laying heads further independently move along corresponding independent axes with respect to the constellation frame.

11. The method of claim 10 wherein the work piece comprises a contoured surface and wherein each of the plurality of tape-laying heads moves independently along the corresponding independent axes such that ones of the plurality of tape-laying heads are perpendicular to corresponding portions of the contoured surface.

12. The method of claim 9 further comprising:
moving a gantry, the gantry attached to the constellation frame, such that the apparatus moves over the contoured surface.

13. The method of claim 9 further comprising:
for each tape-laying head, independently performing yaw, pitch, and roll rotational movement, as well as translation movement, with respect to the constellation frame while laying tape.

14. The method of claim 13 further comprising:
performing yaw, pitch, and roll rotational movement, as well as translation movement, with the constellation frame, wherein movement of the constellation frame is independent of movement of each of the plurality of tape-laying heads.

15. The method of claim 9 wherein controlling laying of tape comprises using a software program and sensors to implement a feedback loop to determine how tape is laid and to determine when to end laying of tape.
